# DEMANDE DE BREVET EUROPEEN

(11) **EP 1 273 499 A1**
(43) Date de publication de la demande: **08.01.2003**
(21) Numéro de dépôt: 02291567.2
(22) Date de dépôt: 24.06.2002
(51) Int. Cl.: B61L 19/06, G06F 15/16

(54) **Procédé de formation et de gestion d'itinéraires et réseau mettant en oeuvre un tel procédé**

(30) Priorité: 05.07.2001 FR 0108938
(71) Demandeur: ALCATEL, 75008 Paris (FR)
(72) Inventeur: Daurensan, Véronique, 92160 Antony (FR); Poupel, Olivier, 91220 Bretigny sur Orge (FR)
(74) Mandataire: Chaffraix, Sylvain

(57) **Abrégé**

La présente invention concerne un procédé de formation et de gestion d'itinéraires ou de routes d'acheminement et un réseau mettant en oeuvre ce procédé.

Procédé de formation et de gestion d'itinéraires ou de routes d'acheminement, caractérisé en ce qu'il consiste à fournir une pluralité de modules logiciels (3, 4, 5) commandant et contrôlant chacun un(e) ou une pluralité de moyens et/ou des ressources (2), et comportant des moyens de communication avec un ou plusieurs autre(s) module(s) (3, 4, 5), à former, un itinéraire (1) en constituant une chaîne ou une succession ordonnée de modules logiciels (3, 4, 5) affectés audit itinéraire (1) et verrouillés chacun dans un état donné fonction de sa contribution audit itinéraire (1) et à désagréger ledit itinéraire (1), après utilisation, en libérant lesdits modules logiciels (3, 4, 5) affectés à ce dernier, les différentes phases d'existence d'un tel itinéraire (1) étant définies par des séquences opératoires consécutives affectant lesdits modules logiciels (3, 4, 5) et leur(s) moyen(s) et/ou ressources (3) associée(s) et comprenant des séquences successives d'allocation, de commande/contrôle et de libération.

## Description

La présente invention concerne les domaines du transport et de la transmission et a pour objet un procédé de formation et de gestion d'itinéraires et un réseau mettant en oeuvre ce procédé.

Autant dans le domaine des transports que des transmissions, on retrouve des structures dans lesquelles des moyens et/ou des ressources sont amenés à coopérer mutuellement et selon un ordre déterminé pour constituer temporairement une voie de transport ou de transmission apte à permettre de réaliser l'acheminement souhaité.

Dans des structures complexes et de grande dimension, un des problèmes cruciaux est la sécurité et la fiabilité de l'acheminement compte tenu des multiples possibilités de configurations et d'utilisations simultanées des moyens et ressources de ladite structure, par différents utilisateurs et pour différentes tâches.

Il existe actuellement un besoin certain pour une sécurité fonctionnelle optimisée en termes de sûreté et de simplicité de mise en oeuvre.

En effet, il existe déjà des solutions de sécurisation des acheminements dans de telles structures de transport et de transmission, mais elles sont relativement complexes, lourdes à tester et à mettre en oeuvre et nécessitent des moyens importants pour garantir une bonne fiabilité et une bonne sécurité.

La présente invention a notamment pour but de pallier les inconvénients précités et de fournir une solution synthétique et générique, permettant de garantir un haut niveau de sécurité et de fiabilité.

A cet effet, la présente invention a pour objet un procédé de formation et de gestion d'itinéraires ou de routes d'acheminement formé(e)s à partir de moyens adaptés et mettant en oeuvre des ressources adéquates, en particulier des circuits de voie, des circuits de signalisation et des points de jonction, caractérisé en ce qu'il consiste à fournir une pluralité de modules logiciels commandant et contrôlant chacun un(e) ou une pluralité de moyens et/ou des ressources du type précité, et comportant des moyens de communication avec un ou plusieurs autre(s) module(s), à former, en fonction de la requête d'un opérateur transmis par l'intermédiaire d'un module d'exploitation pouvant communiquer avec l'ensemble desdits modules, un itinéraire en constituant une chaîne ou une succession ordonnée de modules logiciels affectés audit itinéraire et verrouillés chacun dans un état donné fonction de sa contribution audit itinéraire et à désagréger ledit itinéraire, après utilisation, en libérant lesdits modules logiciels affectés à ce dernier, les différentes phases d'existence d'un tel itinéraire étant définies par des séquences opératoires consécutives affectant lesdits modules logiciels et leur(s) moyen(s) et/ou ressources associée(s) et comprenant des séquences successives d'allocation, de commande/contrôle et de libération.

Selon une première caractéristique de l'invention, le procédé précité consiste à définir le début d'un itinéraire par un signal d'entrée, associé à un module d'entrée, et la fin de l'itinéraire par un signal de sortie, associé à un module de sortie, les messages d'instruction générés par le module d'entrée étant transmis, en l'absence de conflit et de défaut, le long de la chaîne de modules correspondant à l'itinéraire formé, chaque module courant de ladite chaîne ayant connaissance et pouvant communiquer au moins avec son module amont et son module aval dans la chaîne précitée et le module de sortie étant apte à transmettre au module d'entrée les messages reçus et traités avec succès par les modules de ladite chaîne, un seul message à la fois se propageant le long de l'itinéraire.

La sécurité fonctionnelle est avantageusement, en relation avec les séquences ou phases d'existence de l'itinéraire, défini par le fait que, après formation d'un itinéraire donné, les moyens et ressources alloués audit itinéraire et dont l'état a été contrôlé comme étant correct, sont indisponibles pour tout autre itinéraire, que le signal d'entrée reste alloué à un itinéraire donné pendant toute la durée d'utilisation et d'existence de ce dernier et que la séquence de libération affecte en premier le signal d'entrée.

La phase d'allocation des modules à un itinéraire est réalisée par propagation, de module en module, d'un message de demande d'allocation aux modules aval successifs en partant du module d'entrée vers le module de sortie, ce dernier renvoyant ledit message au module d'entrée en cas d'ouverture réussie de l'itinéraire correspondant, avec allocation exclusive des modules à la chaîne ainsi formée.

La phase de contrôle consiste à propager un message de demande de contrôle aux modules aval successifs, chaque module contrôlant l'état de son ou ses moyen(s) ou de sa ou ses ressource(s) associée(s), en fonction de l'itinéraire considéré, notamment pour la détection de pannes ou d'erreurs d'états, à transmettre ledit message du module de sortie vers le module d'entrée en cas de contrôle positif de tous les modules courants et du module de sortie et à procéder en dernier lieu au contrôle dudit module d'entrée, en achevant ainsi ladite séquence de contrôle.

La phase de libération consiste à propager une commande de libération successivement de module en module le long de la chaîne de modules correspondant à l'itinéraire considéré, la transmission de la commande de libération d'un module au module suivant s'effectuant automatiquement ou après vérification d'un état correspondant du ou des moyen(s) ou de la ou des ressource(s) attachée(s) au module amont considéré, ce en fonction de la nature du module considéré et des moyens ou ressources qui lui sont attaché(e)s.

Afin de permettre une gestion aisée des itinéraires, le module d'exploitation est systématiquement et automatiquement informé de l'interruption ou de l'achèvement réussi d'une séquence opératoire donnée, une interruption d'une séquence d'allocation ou de commande/contrôle entraînant automatiquement une libération de l'itinéraire concerné.

La présente invention a également pour objet un réseau de transmission ou de circulation comprenant une pluralité de moyens et de ressources aptes par coopération à former des routes ou des itinéraires d'acheminement, en particulier des circuits de voie et des points de jonction, et un système d'inter-verrouillage ou d'enclenchement pour la formation et la gestion d'itinéraires ou de routes dans ledit réseau, caractérisé en ce que ledit système comprend, d'une part, une pluralité de modules logiciels commandant et contrôlant chacun un(e) ou une pluralité de moyen(s) et/ou ressource(s) et comportant des moyens de communication avec un ou plusieurs autres modules, lesdits modules pouvant s'assembler temporairement en chaînes ordonnées pour former des itinéraires déterminés conformément aux instructions d'un opérateur et, d'autre part, un module d'exploitation formant interface entre les modules logiciels dudit système et l'opérateur et gérant les itinéraires formés dans ledit réseau, notamment leur constitution par affectation de modules logiciels correspondants et leur désagrégation par libération desdits modules, les différentes phases d'existence d'un tel itinéraire étant définies par des séquences opératoires consécutives affectant lesdits modules logiciels et leur(s) moyen(s) et/ou ressources associée(s) et comprenant des séquences successives d'allocation, de commande/contrôle et de libération.

Chaque itinéraire est formé par un module d'entrée apte à générer un signal d'entrée, un ou plusieurs modules courants et un module de sortie apte à générer un signal de sortie, les messages d'instruction émis par le signal d'entrée depuis le module d'entrée étant transmis, en l'absence de conflit et de défaut, le long de la chaîne de modules correspondant à l'itinéraire formé, chaque module courant de ladite chaîne ayant connaissance et pouvant communiquer au moins avec son module amont et son module aval dans la chaîne précitée et le module de sortie étant apte à transmettre au module d'entrée les messages reçus et traités avec succès par les modules de ladite chaîne, un seul message à la fois se propageant le long de l'itinéraire.

Avantageusement, le réseau précité sera apte à mettre en oeuvre le procédé décrit ci-dessus.

Bien entendu, les messages transitant le long de l'itinéraire, notamment sur une partie seulement de ce dernier, ne sont pas tous des messages provenant du module d'entrée. En effet, des messages peuvent également être transmis d'un module courant à un autre module courant de l'itinéraire, sans provenir du module d'entrée et/ou sans parvenir jusqu'au module de sortie.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation schématique d'un réseau comprenant deux ensembles de moyens et de ressources représentés symboliquement par leurs modules logiciels asssociés ;
la figure 2A est un schéma synoptique opérationnel montrant le propagation du message de demande d'allocation dans une chaîne de modules logiciels correspondant à un itinéraire donné, en cas d'allocation réussie ;
la figure 2B est un schéma synoptique opérationnel montrant la propagation des messages dans la chaîne de la figure 2A en cas d'allocation infructueuse ;
la figure 3 est une représentation schématique de détail montrant les opérations de commande et de contrôle d'un moyen ou d'une ressource (sous forme de point de jonction) par un module logiciel ;
la figure 4A est un schéma synoptique opérationnel montrant la propagation d'un message de demande de contrôle dans la chaîne de la figure 2A, en cas de séquence de contrôle réussie ;
la figure 4B est un schéma synoptique opérationnel montrant la propagation de messages dans la chaîne de la figure 2A, en cas de contrôle infructueux,
la figure 5A est un schéma synoptique opérationnel montrant les messages transmis entre les modules associés aux circuits de voie et le module d'entrée dans une phase préalable à la libération, et,
la figure 5B est un schéma synoptique opérationnel montrant la transmission du message de libération dans la chaîne de la figure 3, lors du déroulement de la séquence de libération.

Le procédé selon l'invention tel que décrit ci-dessus peut s'appliquer à différents types de réseaux, tels que notamment des réseaux de transport par voies ferrées ou des réseaux de communication ou de télécommunication.

Le système d'inter-verrouillage faisant partie d'un tel réseau et mettant en oeuvre le procédé selon l'invention peut être dimensionné en fonction du réseau. Son architecture repose sur un ensemble de composants communiquant les uns avec les autres qui peuvent être répartis sur plusieurs ordinateurs, ce système à composants répartis respectant la mise en oeuvre de règles de base qui assurent la sécurité fonctionnelle.

L'invention permet d'aboutir à un traitement synthétique obtenant la mise en oeuvre de règles génériques assurant la sécurité fonctionnelle d'un tel système d'inter-verrouillage et la solution proposée correspond à des séquences opérationnelles et fonctionnelles pour chaque étape de la durée de vie d'un itinéraire 1 : allocation, contrôle et commande, libération.

Le concept de durée de vie de l'itinéraire indiqué ci-dessus permet de respecter trois règles de base pour assurer la sécurité fonctionnelle d'un système d'inter-verrouillage faisant partie d'un réseau selon l'invention.

Les trois règles de base pour assurer la sécurité fonctionnelle peuvent être développées comme suit :
1. Une fois qu'un itinéraire est établi, toutes les ressources qui lui appartiennent ;
   - Lui sont allouées ;
   - Ont été contrôlées comme étant correctes ;
   - Les points de jonction sont verrouillés de manière à ce qu'ils ne puissent pas être déplacés.
   Alors les ressources ne peuvent être ni allouées ni commandées pour un autre itinéraire.
2. Une fois qu'un train pénètre dans un itinéraire :
   - Le signal d'entrée est établi dans son état le plus restrictif (en rouge) ;
   - Le signal d'entrée reste alloué jusqu'à ce que le train entre complètement dans l'itinéraire.
3. Une fois qu'un itinéraire est libéré :
   - La première ressource à être libérée est le signal d'entrée ;
   - Toutes les autres ressources sont libérées après la séquence de libération de l'itinéraire.

Ces trois règles précitées permettent de fournir une sécurité fonctionnelle complète qui garantit d'éviter, dans le cas d'une application à un réseau ferré :
- les collisions frontales,
- les collisions avant-arrière,
- les déraillements des trains franchissant des points de jonction,
- des collisions frontales-latérales.

De manière à satisfaire les trois règles principales décrites ci-dessus, trois phases d'existence de l'itinéraire sont définies conformément à l'invention.

Tout d'abord, l'opérateur (par l'intermédiaire du module d'exploitation) demande l'établissement d'un itinéraire.

L'établissement d'un itinéraire implique :
- La phase d'allocation d'itinéraire,
- La phase de commande et de contrôle de l'itinéraire,
- La phase de libération d'itinéraire, qui débute lorsque le train arrive sur l'itinéraire (dans le cas de l'application particulière précitée).

On décrira ci-après, à l'appui des figures annexées, une application de l'invention dans le cadre d'un réseau ferré, étant rappelé qu'une telle application n'est pas limitative.

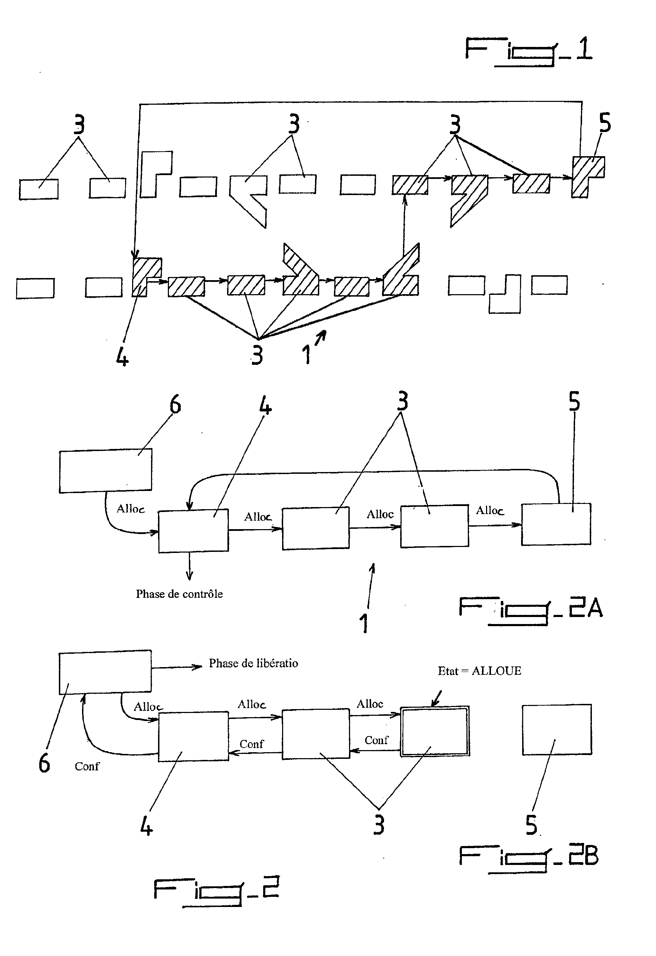

Comme le montre la figure 1 des dessins annexés, un itinéraire 1 est une succession ordonnée de modules logiciels 3, 4, 5 (également appelés automates) qui commandent et contrôlent les éléments sur site (les signaux, les circuits des voies, les points de jonction), dénommés moyens ou ressources 2 précédemment.

Grâce à la définition d'itinéraire selon l'invention, chaque module logiciel 3, 4, 5 est alloué une fois et une seule pour un itinéraire 1 depuis l'instant d'établissement jusqu'à l'instant de libération de cet itinéraire. Chaque module 3, 4, 5 connaît ses voisins (le suivant et le précédent) pour chaque itinéraire 1.

Sur la figure 1, les modules 3, 4, 5 alloués à l'itinéraire 1 sont hachurés (dix modules pour l'exemple représenté), les modules non hachurés étant situés en dehors dudit itinéraire. Chaque module 3, 4, 5 connaît ses états associés à un itinéraire 1, en vue des phases d'allocation et de commande.

Les éléments associés aux modules 3 représentés sur les figures annexées sont principalement de deux types : les éléments de voie et les points de jonction ou d'aiguillage.

Les modules 3 associés à des éléments de voie sont représentés sous forme de blocs rectangulaires sur la figure 1 et les modules 3 associés à des points de jonction ou d'aiguillage (commutateurs) sont représentés sous forme de blocs en forme de chevrons sur la figure 1.

Un élément dans un état verrouillé ne peut pas modifier son état pendant qu'il est verrouillé. Mais il peut être alloué à un itinéraire quelconque, même s'il est verrouillé. La condition est que l'itinéraire puisse être établi avec cet élément dans un tel état.

Le début d'un itinéraire 1 est toujours défini par un signal d'entrée, associé à un automate ou module 4, et la fin de l'itinéraire par un signal de sortie associé à un module 5. Le signal d'entrée est le maître pour la phase d'allocation de l'itinéraire, la phase de commande de l'itinéraire et la phase de libération de l'itinéraire.

Les messages générés par le signal d'entrée sont transmis le long de la chaîne, définis par l'ensemble des modules 3, 4, 5 associés à l'itinéraire 1. Le dernier module, défini comme étant le module de sortie 5, renvoie au module d'entrée 4 les messages reçus et traités.

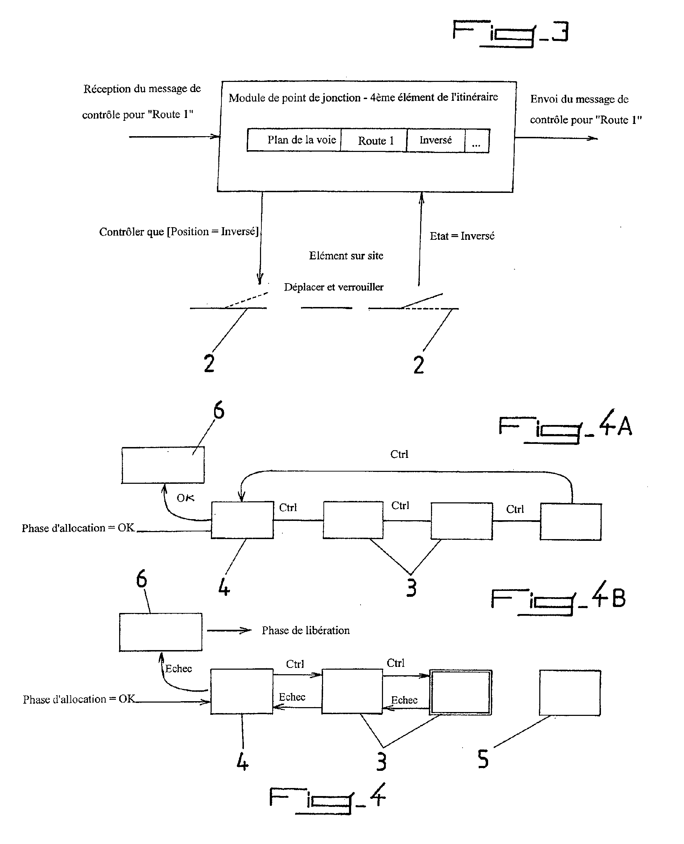

### Allocation d'un itinéraire (Figures 2A et 2B)

Une allocation d'un itinéraire est définie par l'allocation des modules de logiciels 3, 4, 5 qui constituent l'itinéraire 1.

Lorsque le module d'entrée 4 reçoit une demande "d'allocation" provenant du module d'exploitation 6, qui est le gestionnaire des itinéraires de l'application, il entre dans la phase d'allocation. A partir de ce moment, il est alloué à l'itinéraire en cours (s'il n'est pas déjà alloué). Ce module 4 envoie une demande "d'allocation" au module 3 suivant situé en aval, qui lui-même l'adresse au module 3 ou 5 suivant en aval
et ainsi de suite jusqu'au module 5, de manière à la propager le long de l'itinéraire. Lorsqu'un module logiciel 3, 5 reçoit ce message, il vérifie tout d'abord qu'il n'a pas déjà été alloué.

Dans ces conditions, deux cas peuvent se produire :
a) Le module logiciel 3, 5 de l'itinéraire 1 a déjà été alloué pour un autre itinéraire ou n'est pas dans l'état d'allocation correct, et alors, ce module arrête la propagation du message d'allocation et envoie en retour un message "Conf" (pour Conflit) vers le module amont. Chacun des modules amont successifs de l'itinéraire en formation se désalloue jusqu'au module 4 du signal d'entrée, qui indique par message cette non-allocation au module d'exploitation 6. Et ensuite, cet itinéraire ne peut pas être ouvert (Figure 2B). Alors une libération automatique de l'itinéraire peut être lancée.
b) Le module logiciel n'est pas alloué, alors son état est "NON ETABLI". Dans ce cas, il s'alloue lui-même en faisant passer son état à "ALLOUE" et envoie le message d'allocation au module logiciel suivant de l'itinéraire. Dans le cas du dernier module logiciel (module du signal de sortie 5), le message est renvoyé vers le module d'entrée 4. Ceci signifie que tous les modules de l'itinéraire sont alloués de façon exclusive à cet itinéraire, et qu'ainsi aucun conflit n'existe. Alors, le module du signal d'entrée 4 entre dans la phase de contrôle (Figure 2A).

### Contrôle et vérification de l'itinéraire

Cette phase de contrôle est entamée après une phase d'allocation correcte.

Lorsque le module d'entrée 4 reçoit le message d'allocation de retour provenant du module 5 du signal de sortie, il entre dans la phase de contrôle. Il envoie une demande de "contrôle" au module 3 suivant situé en aval, qui lui-même l'adresse au module 3 ou 5 suivant en aval et ainsi de suite jusqu'au module 5, de manière à la propager le long de l'itinéraire 1.

Lorsqu'un module logiciel reçoit ce message, il contrôle que son élément sur site 2 associé est à la position correcte. Chaque module logiciel connaît son état pour tout itinéraire requis possible. Il est responsable de la détection de pannes ou d'erreurs d'états des équipements sur site.

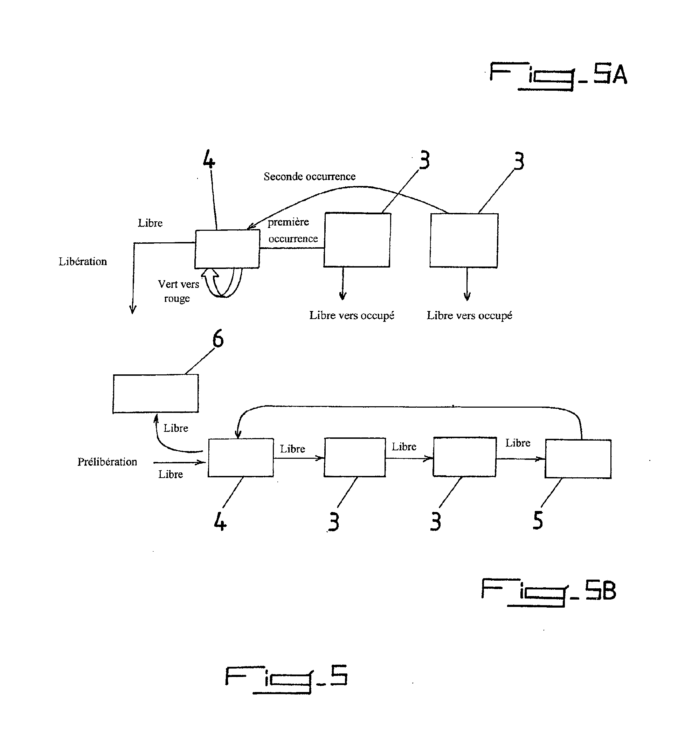

Les deux cas suivants peuvent se produire :
a) La commande d'un module logiciel tombe en panne en raison d'une panne d'un équipement 2 associé ou d'une erreur d'état. Alors ce module arrête la propagation du message de commande et envoie en retour un message "échec du contrôle" vers le module amont, qui est propagé le long de l'itinéraire en direction amont, jusqu'au module du signal d'entrée 4, qui envoie un "accusé de réception d'échec" au module d'exploitation 6 (Figure 4B). Alors une libération automatique de l'itinéraire peut être lancée.
b) La commande d'un module logiciel est correcte (se reporter à la figure 3). Alors ce module continue la propagation du message de commande et envoie un message "contrôle" vers le module en aval, ce message étant propagé de module en module le long de l'itinéraire. Dans le cas d'un élément sur site 2 sous la forme d'un point de jonction, en plus de la commande du point de jonction à la position correcte (normale ou inversée), le moteur du point de jonction est verrouillé pour interdire un déplacement du point de jonction : l'état est verrouillé, pour ne pas pouvoir se déplacer. Dans le cas du dernier module logiciel (module du signal de sortie 5), le message est renvoyé vers le module d'entrée 4. Le module d'entrée 4 est le dernier à être contrôlé. Si ce dernier contrôle est également correct, ceci signifie que tous les modules 3, 4, 5 de l'itinéraire 1 sont dans l'état correct pour cet itinéraire 1, et alors aucune panne, ni aucun défaut n'existe (Figure 4A). Ainsi, le module du signal d'entrée 4 peut être ouvert (établi à vert ou un autre état d'autorisation) pour permettre au train d'entrer sur l'itinéraire 1 contrôlé avec succès. Le module d'exploitation 6 de l'opérateur en est informé.

### La libération de l'itinéraire

Le module de signal d'entrée 4 est fermé, dès que le premier dispositif de circuit de voie 2 détecte le train. Le module de signal d'entrée commande le signal rouge (ARRET). Le signal et le module d'entrée sont libérés dès que le second circuit de voie 2 correspondant au deuxième module 3 détecte le train. Le signal génère la commande de libération, et l'envoie au premier module 3 de circuit de voie 2. Ce circuit de voie 2 attend le passage d'un état "occupé" à un état "dégagé" pour transmettre par l'intermédiaire de son module 3 associé la commande de libération au module logiciel 3 suivant. Chaque module est libéré par le train, et transmet au module suivant la commande de libération, lorsque sa condition de libération est vérifiée. Lorsque le message revient vers le module d'entrée 4, il envoie au module d'exploitation 6 un message pour indiquer que la libération d'itinéraire est achevée (Figure 5B).
a) Libération automatique d'un circuit de voie
   Lorsqu'un circuit de voie 2 reçoit une commande de libération, son module 3 associé est automatiquement libéré dès que sa condition de libération est satisfaite. En général, la condition de libération d'un circuit de voie est le passage d'un état "occupé" à un état "dégagé" sauf pour le dernier circuit de voie. Le dernier circuit de voie avant le signal de sortie est libéré dès qu'il détecte un train et qu'il reçoit la commande de libération (Figure 5A).
b) Libération automatique d'un point de jonction ou d'un signal
   Aucune condition de libération n'est associée à un moyen sous forme de point de jonction, ni à une ressource sous forme de signal. Par conséquent, le module 3 correspondant est libéré dès qu'il reçoit la commande de libération et transmet ce message au module suivant.

Grâce à l'invention, il est donc possible de proposer un procédé de formation et de gestion d'itinéraires, ainsi qu'un système d'inter-verrouillage, permettant de manière simple de fournir une sécurité fonctionnelle élevée dans le cadre de l'exploitation d'un réseau pouvant comprendre un très grand nombre d'équipements, en évitant en particulier tout risque de collision.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

**1.** Procédé de formation et de gestion d'itinéraires ou de routes d'acheminement formé(e)s à partir de moyens adaptés et mettant en oeuvre des ressources adéquates, en particulier des circuits de voie, des circuits de signalisation et des points de jonction, **caractérisé en ce qu'**il consiste
• à fournir une pluralité de modules logiciels (3, 4, 5) commandant et contrôlant chacun un(e) ou une pluralité de moyens et/ou des ressources (2) du type précité, et comportant des moyens de communication avec un ou plusieurs autre(s) module(s) (3, 4, 5), à former, en fonction de la requête d'un opérateur transmis par l'intermédiaire d'un module d'exploitation (6) pouvant communiquer avec l'ensemble desdits modules (3, 4, 5), un itinéraire (1) en constituant une chaîne ou une succession ordonnée de modules logiciels (3, 4, 5) affectés audit itinéraire (1) et verrouillés chacun dans un état donné fonction de sa contribution audit itinéraire (1) et à désagréger ledit itinéraire (1), après utilisation, en libérant lesdits modules logiciels (3, 4, 5) affectés à ce dernier, les différentes phases d'existence d'un tel itinéraire (1) étant définies par des séquences opératoires consécutives affectant lesdits modules logiciels (3, 4, 5) et leur(s) moyen(s) et/ou ressources (3) associée(s) et comprenant des séquences successives d'allocation, de commande/contrôle et de libération,
• et à définir le début d'un itinéraire (1) par un signal d'entrée, associé à un module d'entrée (4), et la fin de l'itinéraire (1) par un signal de sortie, associé à un module de sortie (5), les messages d'instruction générés par le module d'entrée (4) étant transmis, en l'absence de conflit et de défaut, le long de la chaîne de modules (3, 5) correspondant à l'itinéraire (1) formé, chaque module courant (3) de ladite chaîne ayant connaissance et pouvant communiquer au moins avec son module amont (3, 4) et son module aval (3, 5) dans la chaîne précitée et le module de sortie (5) étant apte à transmettre au module d'entrée (4) les messages reçus et traités avec succès par les modules (3, 4, 5) de ladite chaîne, un seul message à la fois se propageant le long de l'itinéraire (1).

**2.** Procédé selon la revendication 1, **caractérisé en ce que**, après formation d'un itinéraire (1) donné, les moyens et ressources (2) alloués audit itinéraire (1) et dont l'état a été contrôlé comme étant correct, sont indisponibles pour tout autre itinéraire (1), **en ce que** le signal d'entrée reste alloué à un itinéraire (1) donné pendant toute la durée d'utilisation et d'existence de ce dernier et **en ce que** la séquence de libération affecte en premier le signal d'entrée.

**3.** Procédé selon l'une quelconque des revendications 1 ou 2, **caractérisé en ce que** la phase d'allocation des modules (3, 4, 5) à un itinéraire (1) est réalisée par propagation, de module en module, d'un message de demande d'allocation aux modules aval successifs en partant du module d'entrée (4) vers le module de sortie (5), ce dernier renvoyant ledit message au module d'entrée (4) en cas d'ouverture réussie de l'itinéraire (1) correspondant, avec allocation exclusive des modules (3, 4, 5) à la chaîne ainsi formée.

**4.** Procédé selon l'une quelconque des revendications 1 à 3, **caractérisé en ce que** la phase de contrôle consiste à propager un message de demande de contrôle aux modules (3, 5) aval successifs, chaque module (3, 4, 5) contrôlant l'état de son ou ses moyen(s) ou de sa ou ses ressource(s) (2) associée(s), en fonction de l'itinéraire (1) considéré, notamment pour la détection de pannes ou d'erreurs d'états, à transmettre ledit message du module de sortie (5) vers le module d'entrée (4) en cas de contrôle positif de tous les modules courants (3) et du module de sortie (5) et à procéder en dernier lieu au contrôle dudit module d'entrée (4), en achevant ainsi ladite séquence de contrôle.

**5.** Procédé selon l'une quelconque des revendications 1 à 4, **caractérisé en ce que** la phase de libération consiste à propager une commande de libération successivement de module en module le long de la chaîne de modules (3, 4, 5) correspondant à l'itinéraire (1) considéré, la transmission de la commande de libération d'un module au module suivant s'effectuant automatiquement ou après vérification d'un état correspondant du ou des moyen(s) ou de la ou des ressource(s) (2) attachée(s) au module (3, 4) amont considéré, ce en fonction de la nature du module considéré et des moyens ou ressources qui lui sont attaché(e)s.

**6.** Procédé selon l'une quelconque des revendications 1 à 5, **caractérisé en ce que** le module d'exploitation (6) est systématiquement et automatiquement informé de l'interruption ou de l'achèvement réussi d'une séquence opératoire donnée, une interruption d'une séquence d'allocation ou de commande/contrôle entraînant automatiquement une libération de l'itinéraire (1) concerné.

**7.** Réseau de transmission ou de circulation comprenant une pluralité de moyens et de ressources aptes par coopération à former des routes ou des itinéraires d'acheminement, en particulier des circuits de voie et des points de jonction, et un système d'inter-verrouillage ou d'enclenchement pour la formation et la gestion d'itinéraires ou de routes dans ledit réseau, **caractérisé en ce que** ledit système comprend, d'une part, une pluralité de modules logiciels (3, 4, 5) commandant et contrôlant chacun un(e) ou une pluralité de moyen(s) et/ou ressource(s) (2) et comportant des moyens de communication avec un ou plusieurs autres modules, lesdits modules (3, 4, 5) pouvant s'assembler temporairement en chaînes ordonnées pour former des itinéraires (1) déterminés conformément aux instructions d'un opérateur et, d'autre part, un module d'exploitation (6) formant interface entre les modules logiciels (3, 4, 5) dudit système et l'opérateur et gérant les itinéraires (1) formés dans ledit réseau, notamment leur constitution par affectation de modules logiciels (3, 4, 5) correspondants et leur désagrégation par libération desdits modules (3, 4, 5), les différentes phases d'existence d'un tel itinéraire (1) étant définies par des séquences opératoires consécutives affectant lesdits modules logiciels (3, 4, 5) et leur(s) moyen(s) et/ou ressources (3) associée(s) et comprenant des séquences successives d'allocation, de commande/contrôle et de libération, chaque itinéraire étant formé par un module d'entrée (4) apte à générer un signal d'entrée, un ou plusieurs modules courants (3) et un module de sortie (5) apte à générer un signal de sortie, les messages d'instruction émis par le signal d'entrée depuis le module d'entrée (4) étant transmis, en l'absence de conflit et de défaut, le long de la chaîne de modules (3, 5) correspondant à l'itinéraire (1) formé, chaque module courant (3) de ladite chaîne ayant connaissance et pouvant communiquer au moins avec son module amont (3, 4) et son module aval (3, 5) dans la chaîne précitée et le module de sortie (5) étant apte à transmettre au module d'entrée (4) les messages reçus et traités avec succès par les modules (3, 4, 5) de ladite chaîne, un seul message à la fois se propageant le long de l'itinéraire (1).

**8.** Réseau selon la revendication 7, **caractérisé en ce qu'**il est apte à mettre en oeuvre le procédé selon l'une quelconque des revendications 1 à 6.

**9.** Réseau selon l'une quelconque des revendications 7 ou 8, **caractérisé en ce qu'**il consiste en un réseau de voies ferrées.

**11.** Réseau selon l'une quelconque des revendications 8 à 9, **caractérisé en ce qu'**il consiste en un réseau de communication ou de télécommunication, par exemple du type mettant en oeuvre une transmission par paquets.
